# EUROPEAN PATENT APPLICATION

(11) **EP 1 041 378 A1**
(43) Date of publication of application: **04.10.2000**
(21) Application number: 00301997.3
(22) Date of filing: 13.03.2000
(51) Int. Cl.: G01N 21/25, G01J 3/28, B07C 5/342

(54) **Produce recognition system including a produce data collector**

(30) Priority: 29.03.1999 US 280587
(71) Applicant: NCR INTERNATIONAL INC., Dayton, Ohio 45479 (US)
(72) Inventor: Treptau, Jeffrey Peter, Golden Valley, Minnesota 55422 (US); Collins Jr, Donald Alexander, Snellville, Georgia 30024 (US); Spencer, Michael Allen, Suwanee, Georgia 30024 (US)
(74) Representative: Williamson, Brian

(57) **Abstract**

A produce recognition system which identifies a produce item by comparing its color and texture information along a spatial area with reference information. The system includes a produce shape data collector including a light source for illuminating a produce item with light, a spectrometer which produces an image having a wavelength dimension and a spatial dimension from light reflected from the produce item, an image capture device which captures discrete wavelengths within the reflected light along the spatial dimension of the image and which produces an electrical signal, and control circuitry for controlling the light source and the image capture device and for digitizing the electrical signal. The system further includes a computer which determines color and texture information along the spatial dimension in the electrical signal and compares the color and texture information with reference information to identify the produce item.

## Description

The present invention relates to produce recognition system and more specifically to a produce recognition system and a produce data collector.

Items which are typically not identified and recorded by a bar code reader include produce items, since produce items are typically not labeled with bar codes. Bar code readers may include a scale for weighing produce items to assist in determining the price of such items. But identification of produce items is still a task for the checkout operator, who must identify a produce item and then manually enter an item identification code. Operators must visually examine produce for a variety of indicators, such as shape, color, and texture, and compare these indicators to pictures of produce items, or alternatively, by looking up text listed in a tabular format. But operator identification methods are slow, inefficient, and prone to error on the order of fifteen percent.

Therefore, it would be desirable to provide a produce recognition system which can minimize operator involvement in produce identification and entry into a transaction. It would be desirable to provide as part of that produce recognition system a produce data collector which collects color, surface texture, and color versus spatial position information for use in identifying the produce item.

In accordance with the teachings of the present invention, a produce recognition system and a produce data collector is provided.

According to a first aspect of the present invention there is provided a produce shape data collector comprising:
a light source for illuminating a produce item with light;
a spectrometer which produces an image having a wavelength dimension and a spatial dimension from light reflected from the produce item; and
an image capture device which captures discrete wavelengths within the reflected light along the spatial dimension of the image.

According to a second aspect of the present invention there is provided produce recognition system comprising:
a produce shape data collector including
a light source for illuminating a produce item with light;
a spectrometer which produces an image having a wavelength dimension and a spatial dimension from light reflected from the produce item;
an image capture device which captures discrete wavelengths within the reflected light along the spatial dimension of the image and which produces an electrical signal; and
control circuitry for controlling the light source and the image capture device and for digitizing the electrical signal; and
a computer which determines color and texture information along the spatial dimension in the electrical signal and compares the color and texture information with reference information to identify the produce item.

According to a third aspect of the present invention there is provided a method of collecting data associated with a produce item comprising the steps of:
(a) illuminating the produce item with light;
(b) producing an image having a wavelength dimension and a spatial dimension from light reflected from the produce item;
(c) capturing discrete wavelengths within the reflected light along the spatial dimension of the image; and
(d) producing an electrical signal containing information about the discrete wavelengths.

According to a fourth aspect of the present invention there is provided a method of recognizing a produce item comprising the steps of:
(a) illuminating the produce item with light;
(b) producing an image having a wavelength dimension and a spatial dimension from light reflected from the produce item;
(c) capturing discrete wavelengths within the reflected light along the spatial dimension of the image;
(d) producing an electrical signal containing information about the discrete wavelengths;
(e) digitizing the electrical signal;
(f) determining intensity variation information in the information in the electrical signal; and
(g) comparing the intensity variation information with reference information to identify the produce item.

The system includes a produce shape data collector including a light source for illuminating a produce item with light, a spectrometer which produces an image having a wavelength dimension and a spatial dimension from light reflected from the produce item, an image capture device which captures discrete wavelengths within the reflected light along the spatial dimension of the image and which produces an electrical signal, and control circuitry for controlling the light source and the image capture device and for digitizing the electrical signal. The system further includes a computer which determines color and texture information along the spatial dimension in the electrical signal and compares the color and texture information with reference information to identify the produce item.

A produce recognition method includes the steps of illuminating the produce item with light, producing an image having a wavelength dimension and a spatial dimension from light reflected from the produce item, capturing discrete wavelengths within the reflected light along the spatial dimension of the image, producing an electrical signal containing information about the discrete wavelengths, and digitizing the electrical signal. The method further determines either color and/or texture information by determining color variation and/or intensity variation information in the information in the electrical signal. Finally, the method compares the color and/or intensity variation information with reference information to identify the produce item.

It is a preferable feature of the present invention that changes in color and intensity information over a spatial area of the produce item are used to identify the produce item.

It is accordingly an object of the present invention to provide a produce recognition system and a produce data collector.

An embodiment of the present invention will be described by way of example, with reference to the accompanying drawings, in which:
Fig. 1 is a block diagram of a transaction processing system including a produce recognition system and the produce data collector of the present invention;
Fig. 2 is a block diagram of the produce data collector;
Fig. 3 is a side view of the produce data collector;
Fig. 4 is a top view of the produce data collector; and
Fig. 5 is a plot of digitized spectral data collected by the produce data collector.

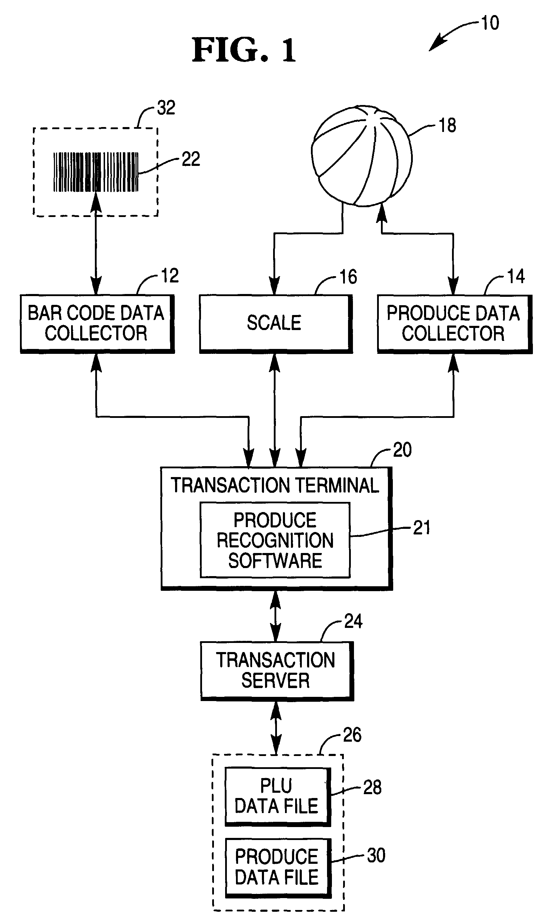

Referring now to Fig. 1, transaction processing system 10 primarily includes bar code data collector 12, produce data collector 14, and scale 16.

Bar code data collector 12 reads bar code 22 on merchandise item 32 to obtain an item identification number, also known as a price look-up (PLU) number, associated with item 32. Bar code data collector 12 may be any bar code data collector, including an optical bar code scanner which uses laser beams to read bar codes. Bar code data collector 12 may be located within a checkout counter or mounted on top of a checkout counter.

Produce data collector 14 collects data associated with produce item 18 for the purpose of identifying produce item 18. Reference produce data is collected and stored within produce data file 30. During a transaction, produce data is collected and compared to produce data within produce data file 30. Produce data collector 14 may act as either a primary or secondary means of identifying produce item 18. Produce data collector 14 may also be combined with bar code data collector 12 into a single unit or mounted directly .

System 10 may optionally include a supplemental produce data collector, which provides additional data to assist in identifying produce item 18. The supplemental produce data collector may provide data such as size, shape, surface texture information, and/or aromatic data, either as a primary or secondary means of identifying produce item 18.

Scale 16 determines a weight for produce item 18. Scale 16 works in connection with bar code data collector 12, but may be designed to operate and be mounted separately. Scale 16 sends weight information for produce item 18 to transaction terminal 20 so that transaction terminal 20 can determine a price for produce item 18 based upon the weight information. Weight information from scale 16 may also be used to identify produce item 18.

Transaction terminal 20 executes produce recognition software 21 which obtains image data from produce data collector 14, determines produce identification information from the image data, and compares the identification information with reference identification information data in produce data file 30.

Alternatively, transaction server 24 may identify produce item 18 in the preceding manner in a network of transaction terminals 20.

In either case, transaction server 24 obtains item identification information from produce data file 30 and sends a corresponding unit price from PLU data file 28 to transaction terminal 20. Transaction terminal 20 calculates a price for produce item 18 by multiplying the unit price by the weight of produce item 18 obtained from scale 16.

PLU data file 28 and produce data file 30 are stored within storage medium 26, but either may also be located instead at transaction terminal 20.

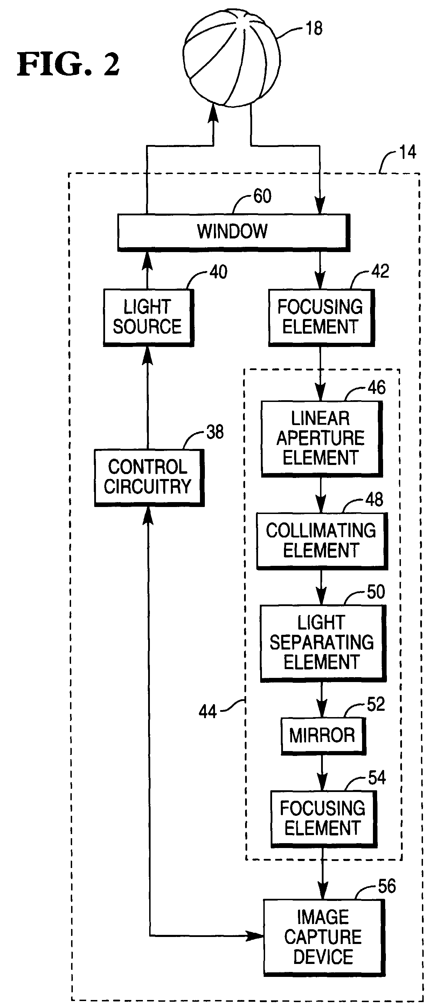

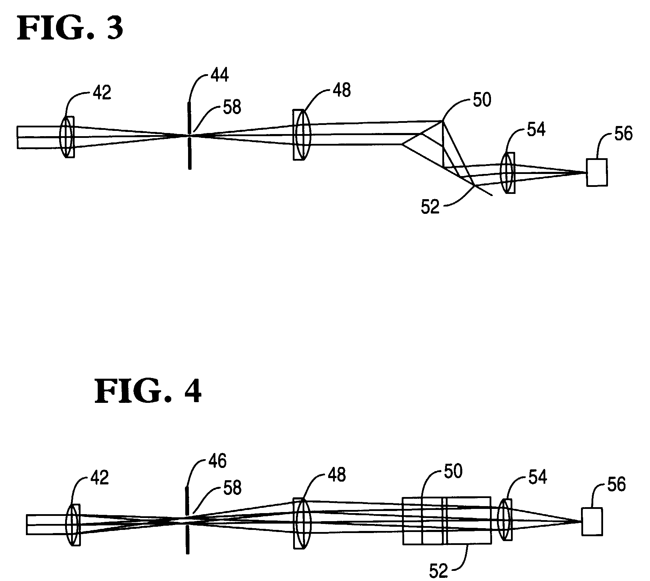

Turning now to Figs. 2-4, produce data collector 14 includes control circuitry 38, light source 40, focusing element 42, spectrometer 44, image capture device 56, and window 60.

Control circuitry 38 controls operation of light source 40. Control circuitry 38 activates light source 40, either automatically when produce item 18 is placed upon scale 16, or in response to operator-initiated commands from transaction terminal 20. Control circuitry 38 additionally controls image capture device 56, digitizes image data, and sends image data from image capture device 56 to transaction terminal 20.

Light source 40 is preferably a halogen lamp, broad-spectrum white light producing LED, or other white light source capable of producing a minimum intensity across the necessary range of wavelengths of produce item 18 to be measured and analyzed. The minimum intensity must be sufficient to recognize produce item 18.

Focusing element 42 focuses reflected light from produce item 18 onto linear aperture element 46. Thus, focusing element 42 images different spatial positions on window 60 to the surface of linear aperture element 46.

Spectrometer 44 places a two-dimensional image on image capture device 56. Spectrometer 44 includes linear aperture element 46, collimating element 48, light separating element 50, mirror 52, and focusing element 54.

Linear aperture element 46 includes a linear aperture 58 for producing a line image. The linear aperture element may be an EDM (electro-discharge machining) cut aperture or laser cut aperture. Linear aperture element 46 restricts input position of light into spectrometer 44. The width of linear aperture 58 directly affects the resolution of spectrometer 44. Linear aperture 58 is about twenty-five microns in width and about three millimeters in height.

Collimating element 48 collimates the line image that has passed through linear aperture element 46. Collimating element 48 is a lens element that directs light such that rays of the light are fundamentally parallel when they hit light separating element 50.

Light separating element 50 disperses the collimated line image from collimating element 48 into a continuous band of wavelengths of light. Light separating element 50 is preferably a prism. An alternative embodiment may use a diffraction grating to disperse the light.

Mirror 52 directs the discrete wavelengths of light towards focusing element 54.

Focusing element 54 focuses the continuous band of wavelengths of light towards image capture device 56. Focusing element 54 is a lens element that directs the now dispersed light onto image capture device 56. Focusing element 54 collects light that is directed along the optical axis as well as off-axis light.

Image capture device 56 captures the discrete wavelengths of light. Image capture device 56 is preferably a two-dimensional image sensing element, such as a two-dimensional charge coupled device (CCD) array, or a two-dimensional imaging complimentary metal oxide semiconductor (CMOS) detector. Pixel elements of image capture device 56 capture image data along discrete points of the band of wavelengths of light. The actual spatial position of a light sample on the pixels of image capture device 56 is directly related to the wavelength of the light sample.

Image capture device 56 produces an electrical signal. Along one axis of image capture device 56, the spectral variation in the received signal can be observed. Along the orthogonal axis, the spatial variation in the received signal can be observed. Control circuitry 38 digitizes the electrical signal and sends it to transaction terminal 20, and/or transaction server 24.

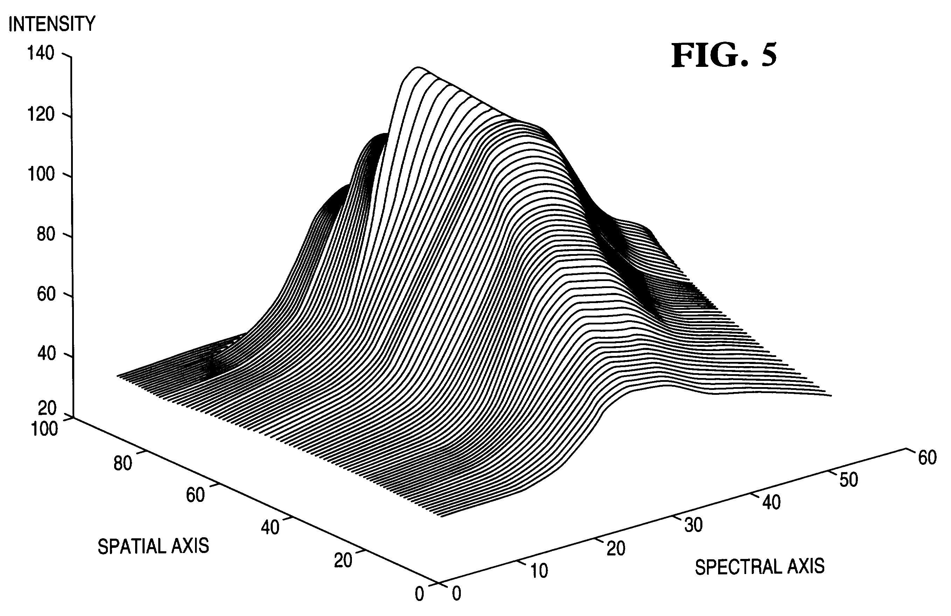

Turning now to Fig. 5, example image data from image capture device 56 is shown. Along a first axis, the Spectral Axis, the spectrum of the reflected light along the line image from produce item 18 is shown. Along a second axis, the Spatial Axis, the variation in spectra along the line image based upon spatial position along produce item 18 is shown. Along a third axis, Intensity, the intensity at different wavelengths along the line image is shown.

Produce recognition software 21 processes the line image data to determine color information and to determine changes in color over an area of produce item 18. Produce recognition software 21 additionally analyzes the intensity at different wavelengths along the line image to determine color, texture, and color versus spatial position information. Produce recognition software 21 uses intensity, wavelength, and position data and combinations thereof to identify produce item 18.

For example, Produce recognition software 21 derives color information from the wavelength data. Produce recognition software 21 compares wavelength data to reference wavelength data in produce data file 30 to identify produce item 18.

Produce recognition software 21 derives texture information from variations in intensity data along the spatial axis. Produce items having smooth surface textures produce uniform intensity data across a sample spatial area, while produce items having rough surface textures produce non-uniform intensity data across a sample spatial area. Produce recognition software 21 compares intensity data variations across the spatial axis with reference intensity data variations stored in produce data file 30 to identify produce item 18.

In addition, produce recognition software 21 derives further identification information by examining color variation along the spatial axis, since some produce items exhibit multiple colors across a sample spatial area. Transaction terminal 20 compares wavelength data variations across the spatial axis with reference wavelength data variations stored in produce data file 30 to identify produce item 18.

Finally, produce recognition software 21 preferably determines a likely candidate or list of ranked candidates and preferably displays the list and/or stored images of produce items on the list for verification by an operator.

Although the invention has been described with particular reference to certain preferred embodiments thereof, variations and modifications of the present invention can be effected within the scope of the invention.

## Claims

1. A produce shape data collector comprising:
a light source for illuminating a produce item with light;
a spectrometer which produces an image having a wavelength dimension and a spatial dimension from light reflected from the produce item; and
an image capture device which captures discrete wavelengths within the reflected light along the spatial dimension of the image.

2. A produce shape data collector as claimed in claim 1, wherein the light source comprises a halogen lamp or white light producing light emitting diode.

3. A produce shape data collector as claimed in any of claims 1 to 2, wherein the spectrometer comprises:
a linear aperture element which produces a line image.

4. A produce shape data collector as claimed in claim 3, wherein the spectrometer further comprises:
a light separating element which disperses the line image in the form of a prism or a diffraction grating.

5. A produce shape data collector as claimed in claim 4, wherein the spectrometer further comprises:
a light collimating element which collimates the line image before it reaches light separating element and a focusing element which focuses the dispersed line image from the light separating element towards the image capture device.

6. A produce shape data collector as recited in claim 5, wherein the spectrometer further comprises:
a mirror between the light separating element and the focusing element.

7. A produce shape data collector as claimed in any preceding claim, further comprising:
control circuitry for controlling operation of the light source and the image capture device.

8. A produce shape data collector as claimed in claim 7, wherein the control circuitry digitizes electrical signals from the image capture device.

9. A produce shape data collector as claimed in any preceding claim, wherein the image capture device comprises:
charge coupled device (CCD) array.

10. A produce shape data collector as recited in any of claims 1 to 8, wherein the image capture device comprises:
a complimentary metal oxide semiconductor (CMOS) detector.

11. A produce recognition system comprising:
a produce shape data collector including
a light source for illuminating a produce item with light;
a spectrometer which produces an image having a wavelength dimension and a spatial dimension from light reflected from the produce item;
an image capture device which captures discrete wavelengths within the reflected light along the spatial dimension of the image and which produces an electrical signal; and
control circuitry for controlling the light source and the image capture device and for digitizing the electrical signal; and
a computer which determines color and texture information along the spatial dimension in the electrical signal and compares the color and texture information with reference information to identify the produce item.

12. A system as claimed in claim 11, wherein the computer determines color information along the spatial dimension to identify produce items having multiple colors.

13. A system as claimed in claim 11, wherein the computer determines texture information by determining intensity variation information along the spatial dimension.

14. A system as claimed in any of claims 11 to 13, wherein the computer comprises:
a transaction terminal for completing a sale of the produce item.

15. A system as claimed in any of claims 11 to 13, wherein the computer comprises:
a server in a store in which the produce item is sold.

16. A system as claimed in claim any of claims 11 to 15, wherein the computer generates a list of likely candidates for the produce item and displays the likely candidates for verification of identity by an operator.

17. A system as claimed in any of claims 11 to 16, wherein the produce shape data collector is mounted to a bar code reader.

18. A system as claimed in any of claims 11 to 17 claim 17, wherein the produce shape data collector is mounted to a checkout counter.

19. A method of collecting data associated with a produce item comprising the steps of:
(a) illuminating the produce item with light;
(b) producing an image having a wavelength dimension and a spatial dimension from light reflected from the produce item;
(c) capturing discrete wavelengths within the reflected light along the spatial dimension of the image; and
(d) producing an electrical signal containing information about the discrete wavelengths.

20. A method of recognizing a produce item comprising the steps of:
(a) illuminating the produce item with light;
(b) producing an image having a wavelength dimension and a spatial dimension from light reflected from the produce item;
(c) capturing discrete wavelengths within the reflected light along the spatial dimension of the image;
(d) producing an electrical signal containing information about the discrete wavelengths;
(e) digitizing the electrical signal;
(f) determining intensity variation information in the information in the electrical signal; and
(g) comparing the intensity variation information with reference information to identify the produce item.
